# EUROPÄISCHE PATENTANMELDUNG

(11) **EP 3 482 971 A1**
(43) Veröffentlichungstag der Anmeldung: **15.05.2019**
(21) Anmeldenummer: 18201658.4
(22) Anmeldetag: 22.10.2018
(51) Int. Cl.: B60B 1/00, G01G 19/12, G01G 23/00

(54) **LANDWIRTSCHAFTLICHES FAHRZEUG**

(30) Priorität: 10.11.2017 DE 102017126417
(71) Anmelder: CLAAS Tractor S.A.S., 78141 Vélizy-Villacoublay Cedex (FR)
(72) Erfinder: Fedde, Thomas, 33129 Delbrück (DE); Birkmann, Christian, 33775 Versmold (DE); Kloster, Victor, 33178 Borchen (DE); Peeters, Michael, 33106 Paderborn (DE)
(74) Vertreter: CLAAS Gruppe

(57) **Zusammenfassung**

Die vorliegende Erfindung betrifft ein landwirtschaftliches Fahrzeug (1), mit zumindest einer Achse (5), an der endseitig Räder (3) angeordnet sind, und einem Messsystem zur Bestimmung von Rad-, Laufwerks- und/oder Achslasten, wobei das Messsystem zumindest einen benachbart zu dem jeweiligen Bodeneingriffsmittel (3) an der Achse (5) angeordneten ersten Sensor (9) zur Bestimmung einer zumindest durch Vertikalkräfte hervorgerufenen mechanischen Belastung im Achskörper, sowie eine Steuereinheit (6) zur Auswertung von durch die ersten Sensoren (9) bereitgestellten Signalen umfasst, wobei an dem Fahrzeug (1) zumindest ein zweiter Sensor (10) vorgesehen ist, der zur Bestimmung einer Querneigung des Fahrzeugs (1) und/oder der Achse (5) eingerichtet ist, dessen Ausgangssignal durch die Steuereinheit zur Kompensation von Einflüssen auf die durch die ersten Sensoren (9) erzeugten Signale, die aus, insbesondere ausschließlich, seitenneigungsbedingt hervorgerufenen Überlagerungen der mechanischen Belastungen resultieren, verwendbar ist.

## Beschreibung

Die vorliegende Erfindung betrifft ein landwirtschaftliches Fahrzeug gemäß dem Oberbegriff des Anspruchs 1 sowie ein Verfahren zur Bestimmung einer Rad-, Laufwerks- und/oder Achslast an einem landwirtschaftlichen Fahrzeug gemäß dem Oberbegriff des Anspruches 7.

Landwirtschaftliche Fahrzeuge, wie Traktoren, Erntemaschinen oder Transportfahrzeuge, weisen zumindest eine Achse auf, an der endseitig Bodeneingriffsmittel angeordnet sind. Für eine Bestimmung von Rad-, Laufwerks- und /oder Achslasten ist zumindest ein benachbart zu dem jeweiligen Bodeneingriffsmittel an der Achse angeordneter erster Sensor vorgesehen. Der erste Sensor ist zur Bestimmung einer zumindest durch Vertikalkräfte hervorgerufenen mechanischen Belastung im Achskörper eingerichtet. Weiterhin ist eine Steuereinheit zur Auswertung von durch den ersten Sensor bereitgestellten Signale vorgesehen.

Aus der WO 2014/000932 A1 ist ein landwirtschaftliches Fahrzeug der eingangs genannten Art bekannt. Zur Bestimmung von Achslasten weist das Fahrzeug eine Achslastmessvorrichtung mit einem Sensor vorgesehen, der als Dehnungsmesstreifen ausgeführt ist und auf einem Achsgehäuse der Achse angeordnet. Mittels des Dehnungsmesstreifen lassen sich Verformungen der Achse, die aus auf die Achse einwirkenden Vertikalkräften resultieren, erfassen. Die Auswertung der Sensorsignale erfolgt durch eine Steuereinheit des Fahrzeugs. Des Weiteren offenbart die WO 2014/000932 A1 ein Verfahren zur Kalibrierung der Achslastmessvorrichtung. Die Messvorrichtung stößt bei der Genauigkeit der Achslastbestimmung an Grenzen, wenn der Betrieb des Fahrzeugs auf unebenem oder geneigtem Untergrund erfolgt, was im Allgemeinen der Regelfall ist.

Ausgehend von dem vorstehend genannten Stand der Technik stellt sich die Aufgabe, ein landwirtschaftliches Fahrzeug der eingangs genannten Art weiterzubilden, das sich durch eine verbesserte Rad- und Achslastbestimmung auszeichnet, insbesondere bei einem Betrieb auf geneigtem Untergrund.

Diese Aufgabe wird erfindungsgemäß durch ein landwirtschaftliches Fahrzeug gemäß dem Anspruch 1 sowie ein Verfahren zur Bestimmung einer Rad-, Laufwerks- und/oder Achslast an einem landwirtschaftlichen Fahrzeug gemäß dem nebengeordneten Anspruch 7 gelöst.

Vorteilhafte Weiterbildungen sind Gegenstand der Unteransprüche.

Gemäß dem Anspruch 1 wird ein landwirtschaftliches Fahrzeug, mit zumindest einer Achse, an der endseitig Bodeneingriffsmittel angeordnet sind, und einem Messsystem zur Bestimmung von Rad-, Laufwerks- und/oder Achslasten, vorgeschlagen. Unter dem Begriff Bodeneingriffsmittel werden insbesondere Rädern und Raupenlaufwerke verstanden. Das Messsystem umfasst zumindest einen benachbart zu dem jeweiligen Bodeneingriffsmittel an der Achse angeordneten ersten Sensor zur Bestimmung einer zumindest durch Vertikalkräfte hervorgerufenen mechanischen Belastung im Achskörper, sowie eine Steuereinheit zur Auswertung von durch die ersten Sensoren bereitgestellten Signalen. Bei dem ersten Sensor handelt es sich um einen Sensor, der die Rad- und Achslast aus einer Verformung oder einem Bauteilspannungsniveau ableitet.

Um die Genauigkeit der Bestimmung von Rad- und Achslast zu verbessern, wird vorgeschlagen, dass an dem Fahrzeug zumindest ein zweiter Sensor vorgesehen ist, der zur Bestimmung einer Querneigung des Fahrzeugs und/oder der Achse eingerichtet ist, dessen Ausgangssignal durch die Steuereinheit zur Kompensation von Einflüssen auf die durch die ersten Sensoren erzeugten Signale, die aus, insbesondere ausschließlich, seitenneigungsbedingt hervorgerufenen Überlagerungen der mechanischen Belastungen resultieren, verwendbar ist. Das Führen des Fahrzeugs auf einem unebenen, insbesondere geneigten, Untergrund, führt, je nach Orientierung des Fahrzeugs, zu einer Querneigung. Das Auftreten einer Querneigung erzeugt an den Bodeneingriffsmitteln angreifende Seitenkräfte, welche die aus den Vertikalkräften resultierenden mechanischen Belastungen überlagern. Die entstehenden Verformungs- und Spannungsanteile aus Vertikalkraft und Seitenkraft können nicht voneinander getrennt werden, sofern Verformungen oder Bauteilspannungen an nur einer Stelle der Achse gemessen werden. Somit kommt es bei einer Querneigung des Fahrzeugs zu Messwerten für die Radlast bzw. Laufwerkslast sowie Achslast, die nicht der tatsächlichen Last entsprechen. Durch die Überlagerung von zwei gegenläufigen Spannungen bzw. Verformungen die aus der Vertikalkraft und der Seitenkraft resultieren, kann es bei unterschiedlichen Kombinationen von Vertikalkraft und Seitenkraft zu einem gleichen Spannungs- bzw. Verformungszustand kommen. Durch die Bestimmung der Querneigung durch zumindest einen zweiten Sensor, lässt sich der jeweilige Einfluss der Querneigung auf das Signal des ersten Sensors kompensieren. Zudem ermöglich der Einsatz des zweiten Sensors eine individuelle Radlastbestimmung des geneigten Fahrzeugs. Der zweite Sensor kann als ein Neigungssensor ausgeführt sein. Alternativ oder zusätzlich können von einem bereits an dem Fahrzeug angeordneten Positionsortungsempfänger, wie ein GPS-Sensor, empfangene Signale ausgewertet werden, aus denen auf das Vorliegen einer Querneigung geschlossen werden kann. Gemäß einer weiteren Alternative kann ein bereits an einem landwirtschaftlichen Fahrzeug vorgesehenes Fahrassistenzsystem zur Fahrdynamikregelung genutzt werden, um das Auftreten einer Querneigung zu detektieren und zu quantifizieren.

Bevorzugt kann der zweite Sensor an dem Fahrzeug und/oder an der zumindest einen Achse angeordnet sein.

Insbesondere kann der zweite Sensor an einem Achsgehäuse der zumindest einen Achse angeordnet sein. Durch die Nähe zu einer Messstelle, an der der erste Sensor angeordnet ist, wird eine höhere Genauigkeit bei der Kompensation der Seitenkrafteinflüsse auf die Messsignale des ersten Sensors erreicht.

Gemäß einer bevorzugten Weiterbildung kann der Steuereinheit zumindest ein Wert für einen Abstand zwischen einem Krafteinleitungspunkt an der Achse und dem jeweiligen ersten Sensor zuführbar sein. Der Abstand zwischen dem Krafteinleitungspunkt, welcher dem Radaufstandspunkt entsprechen kann, und der Position des ersten Sensors an der Achse bzw. dem Achsgehäuse stellt einen weiteren Einflussfaktor auf das Messsignal des ersten Sensors dar. Der Abstand des Krafteinleitungspunktes zu dem ersten Sensor kann beispielsweise dadurch variieren, dass zur Vergrößerung einer Spurbreite des Fahrzeugs Distanzringe oder Verstellnaben verwendet werden.

Weiterhin kann der Steuereinheit zumindest ein Wert für eine Kombination aus einer Felge und einem darauf aufgezogenen Reifen von an der zumindest einen Achse angeordneten Rädern als Bodeneingriffsmittel zuführbar sein. Die verschiedenen Kombinationen von Felgen und Reifen, die an einem landwirtschaftlichen Fahrzeug zum Einsatz kommen können, beeinflussen den Abstand zwischen dem Radaufstandspunkt und dem Krafteinleitungspunkt, wodurch das Signal des ersten Sensors beeinflusst wird. Die unterschiedlichen konstruktiven Gestaltungen von Felgen führen dazu, dass sich zwischen dem Radaufstandspunkt und dem Krafteinleitungspunkt verschiedene Abstandsverhältnisse bezüglich der Position des ersten Sensors einstellen. Die Möglichkeit einer Auswahl der an der Achse angeordneten Kombination aus Felge und Reifen ermöglicht somit eine entsprechende Berücksichtigung des daraus resultierenden Einflusses bei der Auswertung der Messsignale des ersten Sensors.

Bevorzugt kann der erste Sensor als berührungslos arbeitender Sensor ausgebildet sein. Für eine berührungslose Bestimmung von Verformungen oder Spannung in der Achse bzw. der Achswelle kommen insbesondere ein Abstandssensor oder ein magnetostriktiver Sensor als jeweiliger erster Sensor in Betracht.

Weiterhin wird die Aufgabe durch ein Verfahren zur Bestimmung einer Rad-, Laufwerk- und/oder Achslast an einem landwirtschaftlichen Fahrzeug gelöst. Das Fahrzeug umfasst zumindest eine Achse, an der endseitig Bodeneingriffsmittel angeordnet sind, sowie ein Messsystem, welches zumindest einen benachbart zu dem jeweiligen Bodeneingriffsmittel an der Achse angeordneten ersten Sensor, durch den durch Vertikalkräfte hervorgerufenen mechanischen Belastung im Achskörper gemessen werden, sowie eine Steuereinheit, durch welche von den ersten Sensoren bereitgestellte Signale ausgewertet werden, aufweist, wobei durch zumindest einen zweiten, an dem Fahrzeug angeordneten Sensor eine Querneigung der Achse bestimmt wird, wobei das Ausgangssignal des zumindest einen zweiten Sensors der Steuereinheit zugeführt und zur Kompensation von Einflüssen auf die durch die ersten Sensoren erzeugten Signale, die aus, insbesondere ausschließlich, seitenneigungsbedingt hervorgerufenen Überlagerungen der mechanischen Belastungen resultieren, verwendet wird.

Da die von dem ersten Sensor erfasste Verformung bzw. Spannung von der Entfernung zwischen der angreifenden Vertikalkraft und seiner Messstelle abhängig ist, kann ein Abstand zwischen einem Krafteinleitungspunkt eines der an der zumindest einen Achse angeordneten Bodeneingriffsmittel und dem diesem Bodeneingriffsmittel zugeordneten ersten Sensor bestimmt werden, der in die Auswertung der Messsignale des ersten Sensors einfließt. Die Bestimmung des Abstands kann mittels eines Sensors erfolgen, beispielsweise durch einen Lasersensor, oder durch manuelles Ausmessen des Abstands zwischen dem ersten Sensor und dem Krafteinleitungspunkt. Die Bestimmung des Abstands kann auch durch das Messen einer Beabstandung im Bereich des Bodeneingriffsmittels erfolgen, welche in einem festen geometrischen Verhältnis zu dem Abstand steht, so dass daraus der Abstand berechnet werden kann. Die auf diese Weise ermittelten Abstandswerte können an die Steuereinheit übertragen werden, damit diese für die Auswertung der Signale des ersten Sensors zur Verfügung stehen.

Des Weiteren kann der Steuereinheit zumindest ein Wert für eine Kombination aus einer Felge und einem darauf aufgezogenen Reifen von an der zumindest einen Achse angeordneten, als Räder ausgeführten Bodeneingriffsmitteln bereitgestellt werden. Die sich aus diversen Kombinationen von Felge und Reifen ergebenden unterschiedlichen Abmessungen beeinflussen den Abstand zwischen dem Radaufstandspunkt und dem Krafteinleitungspunkt, wodurch das Messsignal des ersten Sensors beeinflusst wird. Das Vorsehen einer vorgegeben Auswahlmöglichkeit von an dem Fahrzeug montierten Kombinationen von Felge und Reifen vereinfacht die Berücksichtigung dieses Einflussfaktors. Die Bereitstellung von Daten für eine Felge-Rad-Kombination ist auch manuell durchführbar, in dem diese mittels einer geeigneten Schnittstelle an die Steuereinheit übertragen werden können.

Gemäß einer Weiterbildung können für eine Kalibrierung des Messsystems Referenzwerte für eine Rad-, Laufwerks- und Achslast bei nichtvorliegender Querneigung des Fahrzeuges bestimmt und in der Steuereinheit hinterlegt und auf Grundlage dieser Referenzwerte für zumindest einen Querneigungswinkel Radlast- und Achslastwerte berechnet werden. So kann beispielsweise mittels einer Radlastwiegevorrichtung die Radlast und die Achslast bei einer Nullneigung des Fahrzeugs gemessen werden. Für verschiedene Querneigungswinkel kann mithilfe von trigonometrischen Funktionen der Radlastwert für das unter dem jeweiligen vorgegebenen Querneigungswinkel geneigte Fahrzeug theoretisch berechnet werden. Im Anschluss daran können die berechneten Werte durch eine unter dem gleichen Winkel durchgeführte Kalibrierfahrt verifiziert werden.

Die vorliegende Erfindung wird nachstehend anhand eines in den Zeichnungen dargestellten Ausführungsbeispieles näher erläutert.

Es zeigen:
- Fig. 1: eine schematische Seitenansicht eines landwirtschaftlichen Fahrzeugs;
- Fig. 2: eine schematische Ansicht eines landwirtschaftlichen Fahrzeugs von hinten;
- Fig. 3: eine perspektivische Teilansicht einer Hinterachse des in Fig. 1 gezeigten Fahrzeugs in einer Teilschnittdarstellung.

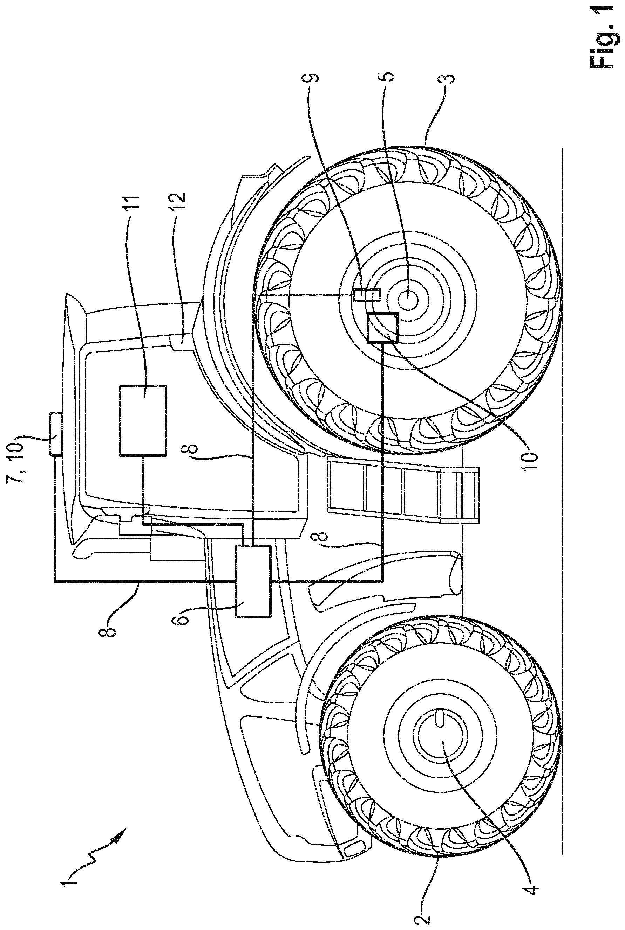

In Fig. 1 ist ein landwirtschaftliches Fahrzeug in Form eines Traktors 1 in schematischer Seitenansicht dargestellt. Es handelt sich bei dem Traktor 1 beispielsweise um einen Standardtraktor, der mit einem Antriebsmotor und einem Fahrwerk ausgestattet ist. Davon sind in der Ansicht gemäß Fig. 1 jeweils ein Vorderrad 2 und ein Hinterrad 3 dargestellt. Die Vorderräder 2 sind jeweils an einer dazwischen liegenden Vorderachse 4 und die Hinterräder 3 sind jeweils an einer dazwischen liegenden Hinterachse 5 angebaut. Der Traktor 1 ist in dem vorliegenden Ausführungsbeispiel über die Hinterräder 3 antreibbar. Alternative Antriebsformen, wie Vorderachs- oder Allradantrieb sind ebenfalls denkbar. Zu diesem Zweck weist der Traktor 1 einen Antriebsstrang auf, mit dem eine Antriebsverbindung von dem nicht gezeigten Antriebsmotor über die zumindest über die Hinterachse 5 zu den Hinterrädern 3 herstellbar ist.

Die Vorderräder 2 und die Hinterräder 3 sind Teil des Fahrwerks und stellen den Kontakt des Traktors 1 gegenüber dem Boden her. Die Gesamtmasse des Traktors 1 stützt sich demnach ausschließlich über die Vorderräder 2 und die Hinterräder 3 auf dem Boden ab. Dabei wirken an sämtlichen Rädern 2 und 3 des Traktors 1 in vertikaler Richtung Kräfte, die als Radlast bezeichnet werden.

Diese Kräfte resultieren aus dem Eigengewicht des Traktors 1, einer Anbringung eines Anbaugerätes sowie einer gegebenenfalls erforderlich werdenden Ballastierung. An den angetriebenen Hinterrädern 3 des Traktors 1 wirken im Antriebszustand zusätzlich in horizontaler Richtung wirkende, als Triebkräfte bezeichnete Kräfte beziehungsweise im Bremszustand Bremskräfte, sowie Antriebsmomente beziehungsweise im Bremszustand Bremsmomente. Weiterhin treten Stützkräfte auf, die von an dem Traktor 1 front- und/oder heckseitig angebrachten Anbaugeräten beziehungsweise einer Ballastierung eingebracht werden.

Weiterhin umfasst der Traktor 1 zumindest eine Steuereinheit 6 welche durch Signal- und Steuerleitungen 8 mit einer Eingabe-Ausgabeeinheit 11 verbunden ist, die sich, für eine Bedienperson zugänglich, in einer Kabine 12 des Traktors 1 befindet. Die Steuereinheit 6 kann zudem durch eine Signal- und Steuerleitung 8 mit einem Signalempfänger 7 eines Positionsortungssystems verbunden sein, der auf dem Dach der Kabine 12 angeordnet ist. Der Signalempfänger 7 ist im Allgemeinen zur Bestimmung einer Neigung eingerichtet und kann somit alternativ oder zusätzlich als zweiter Sensor 10 fungieren, um die Querneigung der Hinterachse 5 bestimmen zu können. Weiterhin zeigt die Darstellung in Fig. 1 die Anordnung eines ersten Sensors 9, der der Bestimmung von einer durch Vertikalkräfte hervorgerufenen mechanischen Belastung im Achskörper der Hinterachse 5 dient. An der Hinterachse 5 ist benachbart zu dem jeweiligen Hinterrad 3 jeweils ein erster Sensor 9 angeordnet. Der erste Sensor 9 ist bevorzugt als berührungslos arbeitender Abstandssensor ausgebildet. Durch den ersten Sensor 9 lassen sich durch die Vertikalkräfte hervorgerufene Verformungen oder in der Hinterachse erzeugte Bauteilspannungen, insbesondere Biegespannungen, bestimmen. Weiterhin ist an der Hinterachse 5 ein zweiter Sensor 10 angeordnet, der als Neigungssensor ausgeführt ist. Mittels des zweiten Sensors 10 wird die Querneigung der Hinterachse 5 respektive des Traktors 1 bestimmt.

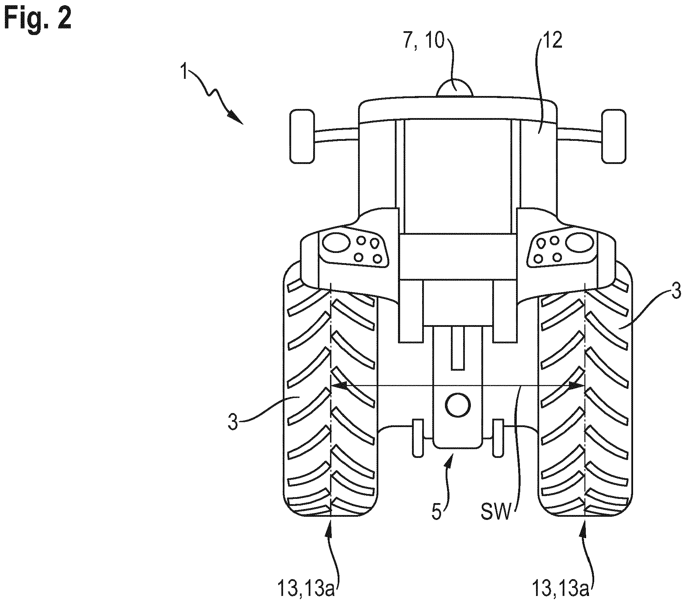

Die Darstellung in Fig. 2 zeigt eine schematische Ansicht des landwirtschaftlichen Fahrzeugs von hinten. Mit dem Bezugszeichen SW ist ein Abstand zwischen zwei Radaufstandspunkten 13 der Hinterachse bezeichnet, die so genannte Spurweite. Die Radaufstandspunkte 13 kennzeichnen auch den Bereich, in welchem die in vertikaler Richtung wirkenden Kräfte eingeleitet werden, die auf das jeweilige Hinterrad 3 einwirken. Die Position von Krafteinleitungspunkten 13a und Radaufstandspunkten 13 müssen nicht miteinander übereinstimmen. Die Spurweite SW an dem Traktor 1 kann durch eine Verwendung von Distanzscheiben oder Verstellnaben variiert werden, was zu einer Veränderung der Position des Krafteinleitungspunkts 13a bezogen auf den ersten Sensor 9 bewirkt. Demgegenüber wird die Position des Radaufstandspunktes 13 gegenüber dem Krafteinleitungspunkt 13a durch die konstruktive Ausgestaltung einer Felge beeinflusst.

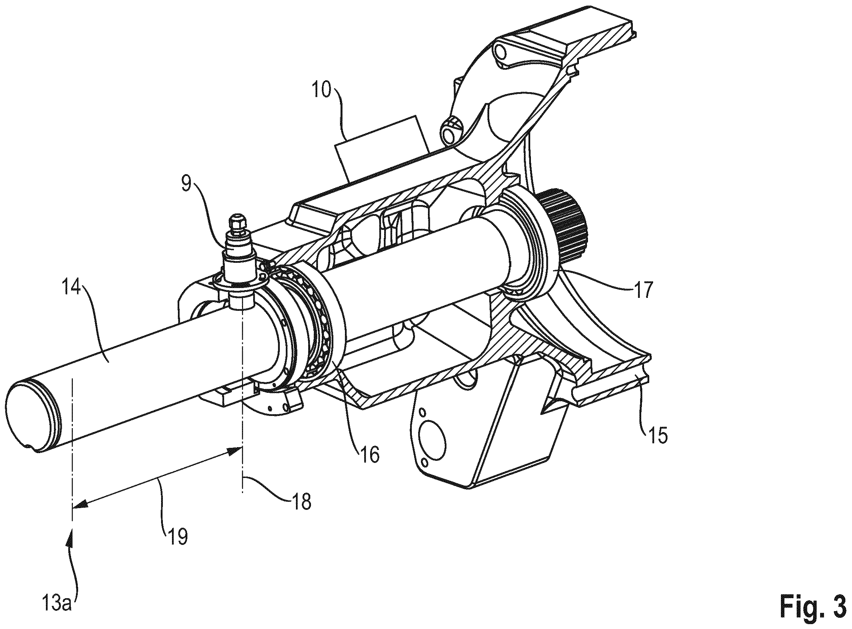

Fig. 3 zeigt eine perspektivische Teilansicht der Hinterachse 5 des in Fig. 1 gezeigten Traktors 1 in einer Teilschnittdarstellung. Die Hinterachse 5 ist in ihren wesentlichen Merkmalen symmetrisch aufgebaut, so dass lediglich eine Seite der Hinterachse 5 abschnittsweise dargestellt ist. Insbesondere weist die Hinterachse 5 von einem mittig angeordneten - nicht dargestellten - Differential nach links und nach rechts zu den jeweiligen Hinterrädern 3 verlaufende Hinterachswellen 14 auf. Die Hinterachswellen 14 sind dabei als Wellenstummel ausgeführt. Jede der Hinterachswellen 14 ist in einem Achstrichtergehäuse 15, der Teil des Achskörpers der Hinterachse 5 ist, mittels zweier Wälzlager drehbar gelagert. An einem äußeren Bereich des jeweiligen Achstrichtergehäuses 15, das heißt dort wo die Hinterachswelle 14 aus dem geschlossenen Achstrichtergehäuse 15 austritt, befindet sich ein äußeres Radlager 16. Innerhalb des Achstrichtergehäuses 15 ist, beabstandet zu dem äußeren Radlager 16, ein inneres Radlager 17 angeordnet. Das jeweilige äußere Radlager 16 bildet für die jeweilige Hinterachswelle 14 eine äußerste Lagerstelle an der Hinterachse 5.

Die innerhalb der jeweiligen Hinterachswelle 14 wirkenden Biegemomente beziehungsweise Normalspannungen, die insbesondere mit einer auf das jeweilige Hinterrad 3 wirkenden Radlast und/oder mit einer darauf wirkenden Triebkraft korrespondieren, erreichen im Bereich des äußeren Radlagers 16 konstruktionsbedingt jeweils ihren höchsten Wert. Daher weist die Hinterachse 5 in diesem Bereich den ersten Sensor 9 auf, mit welchem die mechanische Belastung der Hinterachswelle 14 erfasst wird, die aus der in vertikaler Richtung wirkenden Radkraft resultiert. Ein Abstand 19 zwischen einer Sensorpositionssachse 18 als Referenz für eine Messstelle des ersten Sensors 9 und dem Krafteinleitungspunkt 13a, in welchem die Krafteinleitung in vertikaler Richtung erfolgt, lässt einen Rückschluss auf die Spurweite SW zu.

Weiterhin ist der zweite Sensor auf der Oberfläche des Achstrichtergehäuses 15 angeordnet. Durch diese Positionierung des zweiten Sensors 10 können Messsignale bereitgestellt werden, die unmittelbar aus einer Querneigung der Hinterachse 5 des Traktors 1 resultieren, die durch einen Betrieb auf einer geneigten Fläche oder an einem Hang auftritt. Eine Anordnung des zweiten Sensors 10 an einer anderen Stelle des Traktors 1, wie der Kabine 12, ist ebenfalls denkbar. Dazu kann der zweite Sensor 10 der Signalempfänger 7 sein. Jedoch kann das erzeugte Messsignal zusätzlichen Einflüssen unterliegen, welche beispielsweise auf eine Federung der Kabine 12 zurückzuführen sind. Diese Einflüsse bedürfen daher einer zusätzlichen Kompensation, da sich aufgrund der Federung der Kabine eine andere Querneigung einstellen kann, als an der Hinterachse 5.

Das Betreiben des Traktors 1 an einem Hang hat zur Folge, dass an den Rädern 2, 3 Seitenkräfte auftreten, welche sich auf die mechanischen Belastungen der Vorder- und Hinterachse 4, 5 auswirken. Die sensorische Bestimmung der mechanischen Belastungen der Hinterachse 5 wird durch die Seitenkräfte beeinflusst, durch die Spannungs- und Verformungszustände in der jeweiligen Hinterachswelle 14 entstehen, die sich mit den durch die Vertikalkräfte hervorgerufenen Spannungen bzw. Verformungen überlagern. Die entstehenden Verformungs- bzw. Spannungsanteile aus Vertikalkraft und Seitenkraft können nicht voneinander getrennt werden. Außerdem kann es durch die Überlagerung von zwei gegenläufigen Spannungen bzw. Verformungen aus Vertikalkraft und Seitenkraft bei unterschiedlichen Kombinationen von Vertikalkraft und Seitenkraft zu einem gleichen Spannungs- bzw. Verformungszustand kommen.

Um diesen Einfluss durch die Seitenkräfte bei der Rad- und Achslastbestimmung zu berücksichtigen, wird der Steuereinheit 6 durch den zweiten Sensor 10 ein erfasster Querneigungswinkel bereitgestellt, um die Einflüsse der Seitenkräfte auf das Messsignal des jeweiligen ersten Sensors 9 kompensieren zu können.

Hierzu ist es erforderlich, weitere Einflussgrößen zu bestimmen und der Steuereinheit 6 bereitzustellen, welche, neben der durch den zweiten Sensor 10 bestimmbaren Querneigung, die Bestimmung der Rad- und Achslast durch das Messen von Spannungen bzw. Verformungen beeinflussen. Die auftretende Spannung bzw. Verformung, die durch den ersten Sensor 9 erfassbar ist, ist abhängig von dem Abstand 19 zwischen der angreifenden Vertikalkraft im Krafteinleitungspunkt 13a zur Messstelle des ersten Sensors 9. Der Abstand 19 kann z.B. durch eine Spurweitenanpassung variieren. Das Messsignal des ersten Sensors wird weiterhin von einer für die Räder 3 verwendeten Reifen-Felgen-Kombination abhängig, die jeweils unterschiedliche Abmessungen aufweisen. So können sich zwischen dem Radaufstandspunkt 13 und dem Krafteinleitungspunkt 13a verschiedene Abstandsverhältnisse bezüglich der Position des ersten Sensors 9 einstellen. Daher muss dieser Einfluss für die Auswertung des von dem ersten Sensor 9 bereitgestellten kraftsensitiven Signals zusätzlich berücksichtigt werden.

Hierzu ist es notwendig, den Abstand 19 zu bestimmen, was durch eine sensorische Abstandsbestimmung erfolgen kann. Alternativ kann der Abstand manuell durch eine von einer Bedienperson durchgeführten Messung bestimmt und durch eine anschließende Eingabe des so bestimmten Abstandswerte mittels der Eingabe-Ausgabeeinheit 11 durchgeführt werden.

Die Vorgabe einer Felgen-Reifen-Kombination der jeweiligen Räder 3, welche die Lage des Radaufstandspunkt 13 bestimmt, lässt sich beispielsweise durch eine Auswahl aus einer in der Steuereinheit 6 hinterlegbaren Auflistung vornehmen, die auf der Eingabe-Ausgabeeinheit 11 dargestellt wird.

Um die Einflüsse der Seitenkräfte bei Querneigung des Traktors 1 kompensieren zu können, ist es erforderlich, eine Wertzuweisungsmatrix zu erzeugen, durch welche die Rad- und Achslast in Abhängigkeit der aktuellen Information über die Neigung, die Verformung bzw. Spannung in der Hinterachswelle 14 und den Abstand 19 zwischen Krafteinleitungspunkt 13a, der mit dem Radaufstandspunkt 13 zusammenfallen kann, und der Sensorpositionsachse 18 als Referenz für die kraftsensitive Messstelle, ausgegeben wird. Die Wertzuweisungsmatrix wird in der Steuereinheit 6 hinterlegt.

Die Erzeugung einer solchen Wertzuweisungsmatrix kann wie nachfolgend beschrieben durchgeführt werden. Dazu sind mehrere Kalibrierfahrten notwendig, um eine gewünschte Bandbreite innerhalb eines jeden Einflussfaktors, der Querneigung, der auftretenden Rad- und Achslast und dem Abstand 19, zu ermitteln. Während der Kalibrierfahrten werden Signale von dem ersten Sensor 9 bei Variation von Querneigung, Radlast sowie Abstand 19 erfasst und in der Steuereinheit 6 hinterlegt. Während die Querneigung mittels des zweiten Sensors 10 bestimmbar ist und der Abstand 19 durch sensorische Abstandsbestimmung oder manuelles ausmessen, kann es für die Bestimmung der Rad- und Achslast einer abweichenden Vorgehensweise bedürfen, sofern die Radlast nicht mittels einer geeigneten Referenzmesstechnik unmittelbar während der Fahrt bestimmt wird. Kommt keine Referenzmesstechnik zum Einsatz, so werden mittels einer Radlastwiegevorrichtung die Radlast und die Achslast bei Nullneigung gemessen und die Messwerte in der Steuereinheit 6 hinterlegt. Mithilfe von trigonometrischen Funktionen und in Kenntnis des Schwerpunkts des Traktors 1 berechnet die Steuereinheit 6 den jeweiligen Radlastwert für das unter einem vorgegebenen Querneigungswinkel geneigt stehenden Traktor1. Anschließend wird jeweils eine Kalibrierfahrt für den vorgegebenen Winkel durchgeführt, um den berechneten Wert für die Radlast zu verifizieren.

Die auf diese Weise generierte Wertzuweisungsmatrix lässt sich umstellen, um bei Eingabe eines Abstand 19 und/oder einer Felgen-Reifen-Kombination durch die Eingabe-Ausgabeeinheit 11 sowie den Empfang von Werten für die Querneigung durch den zweiten Sensor und die Verformung bzw. Spannung durch den jeweiligen ersten Sensor 9 die jeweilige Radlast auszugeben.

### Bezugszeichenliste

- 1: Traktor
- 2: Vorderrad
- 3: Hinterrad
- 4: Vorderachse
- 5: Hinterachse
- 6: Steuereinheit
- 7: Signalempfänger
- 8: Signal- und Steuerleitung
- 9: Erster Sensor
- 10: Zweiter Sensor
- 11: Eingabe-Ausgabeeinheit
- 12: Kabine
- 13: Radaufstandspunkt
- 13a: Krafteinleitungspunkt
- 14: Hinterachswelle
- 15: Achstrichtergehäuse
- 16: Äußeres Radlager
- 17: Inneres Radlager
- 18: Mittellängsachse
- 19: Abstand
- SW: Spurweite

## Patentansprüche

1. Landwirtschaftliches Fahrzeug (1), mit zumindest einer Achse (5), an der endseitig Räder (3) angeordnet sind, und einem Messsystem zur Bestimmung von Rad-, Laufwerks- und/oder Achslasten, wobei das Messsystem zumindest einen benachbart zu dem jeweiligen Bodeneingriffsmittel (3) an der Achse (5) angeordneten ersten Sensor (9) zur Bestimmung einer zumindest durch Vertikalkräfte hervorgerufenen mechanischen Belastung im Achskörper, sowie eine Steuereinheit (6) zur Auswertung von durch die ersten Sensoren (9) bereitgestellten Signalen umfasst, **dadurch gekennzeichnet, dass** an dem Fahrzeug (1) zumindest ein zweiter Sensor (10) vorgesehen ist, der zur Bestimmung einer Querneigung des Fahrzeugs (1) und/oder der Achse (5) eingerichtet ist, dessen Ausgangssignal durch die Steuereinheit zur Kompensation von Einflüssen auf die durch die ersten Sensoren (9) erzeugten Signale, die aus, insbesondere ausschließlich, seitenneigungsbedingt hervorgerufenen Überlagerungen der mechanischen Belastungen resultieren, verwendbar ist.

2. Fahrzeug (1) nach Anspruch 1, dass der zweite Sensor (10) an dem Fahrzeug (1) und/oder der zumindest einen Achse (5) angeordnet ist.

3. Fahrzeug (1) nach Anspruch 1 oder 2, dass der zweite Sensor (10) an einem Achsgehäuse (5) der zumindest einen Achse (3) angeordnet ist.

4. Fahrzeug (1) nach einem der vorangehenden Ansprüche, **dadurch gekennzeichnet, dass** der Steuereinheit (6) zumindest ein Wert für einen Abstand (SW) zwischen einem Krafteinleitungspunkt (13a) an der Achse (5) und dem jeweiligen ersten Sensor (9) zuführbar ist.

5. Fahrzeug (1) nach einem der vorangehenden Ansprüche, **dadurch gekennzeichnet, dass** der Steuereinheit (6) zumindest ein Wert für eine Kombination aus einer Felge und einem darauf aufgezogenen Reifen von an der zumindest einen Achse (5) angeordneten, als Räder (3) ausgeführten Bodeneingriffsmitteln zuführbar ist.

6. Fahrzeug (1) nach einem der vorangehenden Ansprüche, **dadurch gekennzeichnet, dass** der erste Sensor (9) als berührungslos arbeitender Sensor ausgebildet ist.

7. Verfahren zur Bestimmung einer Rad-, Laufwerks- und/oder Achslast an einem landwirtschaftlichen Fahrzeug (1), umfassend zumindest eine Achse (5), an der endseitig Bodeneingriffsmittel (3) angeordnet sind, sowie ein Messsystem, welches zumindest einen benachbart zu dem jeweiligen Bodeneingriffsmittel (3) an der Achse (5) angeordneten erster Sensor(9), durch den zumindest durch Vertikalkräfte hervorgerufenen mechanischen Belastung im Achskörper gemessen werden, sowie eine Steuereinheit (6), durch welche von den ersten Sensoren (9) bereitgestellte Signale ausgewertet werden, aufweist, **dadurch gekennzeichnet, dass** durch zumindest einen zweiten, an dem Fahrzeug (1) angeordneten Sensor (10) eine Querneigung des Fahrzeugs und/oder der Achse (5) bestimmt wird, wobei ein Ausgangssignal des zumindest einen zweiten Sensors (10) der Steuereinheit (6) zugeführt und zur Kompensation von Einflüssen auf die durch die ersten Sensoren (9) erzeugten Signale, die aus, insbesondere ausschließlich, seitenneigungsbedingt hervorgerufenen Überlagerungen der mechanischen Belastungen resultieren, verwendet wird.

8. Verfahren nach Anspruch 7, **dadurch gekennzeichnet, dass** ein Abstand (SW) zwischen einem Krafteinleitungspunkt (13a) eines der an der zumindest einen Achse (5) angeordneten Bodeneingriffsmittel (3) und dem diesem Bodeneingriffsmittel (3) zugeordneten ersten Sensor (9) bestimmt wird.

9. Verfahren nach Anspruch 7 oder 8, **dadurch gekennzeichnet, dass** der Steuereinheit (6) zumindest ein Wert für eine Kombination aus einer Felge und einem darauf aufgezogenen Reifen von an der zumindest einen Achse (5) angeordneten, als Räder (3) ausgeführten Bodeneingriffsmitteln bereitgestellt wird.

10. Verfahren nach einem der Ansprüche 7 bis 9, **dadurch gekennzeichnet, dass** für eine Kalibrierung des Messsystems Referenzwerte für eine Rad- und Achslast bei nichtvorliegender Querneigung des Fahrzeuges (1) bestimmt und in der Steuereinheit (6) hinterlegt und auf Grundlage dieser Referenzwerte für zumindest einen Querneigungswinkel Radlast- und Achslastwerte berechnet werden.
